# EUROPEAN PATENT APPLICATION

(11) **EP 1 983 660 A1**
(43) Date of publication of application: **22.10.2008**
(21) Application number: 07007727.6
(22) Date of filing: 16.04.2007
(51) Int. Cl.: H04B 7/06

(54) **Configurable multi-antenna transmitter/receiver**

(71) Applicant: Nokia Siemens Networks Oy, 02610 Espoo (FI)
(72) Inventor: Eichinger, Josef Martin, 85464 Neufinsing§ (DE); Schutz, Egon Dr., 80993 München (DE)
(74) Representative: Weidel, Gottfried

(57) **Abstract**

The present invention relates to a method, multi-antenna device and computer program product for receiving or transmitting data via a front-end unit (200) comprising at least two antennas (41-4n), wherein configuration information used for beamforming by said at least two antennas (41-4n) is supplied to said front-end unit (200) prior to an individual transmission or reception of data, and wherein said configuration information is generated based on a grouping of respective other transmission ends to adapt at least one respective single beam to cover at least one determined group of said respective other transmission ends. Thereby, different beams can be generated at different timings, so that the number of data streams to be processed, the data rate, and the processing complexity can be reduced substantially.

## Description

### FIELD OF THE INVENTION

The present invention relates to a method, multi-antenna device and computer program product for receiving or transmitting data via a front-end unit comprising at least two antennas, such as multiple-input multiple-output (MIMO) transceiver.

### BACKGROUND OF THE INVENTION

Rising importance of wireless services has led to corresponding increased demand for higher network capacity and performance. Conventional options include higher bandwidth, optimized modulation or code-multiplex systems, but offer practically only limited potential to increase the spectral efficiency.

In so-called MIMO (Multiple Input Multiple Output) systems, such as transmitter, receiver or transceiver arrangements, several antennas or antenna arrays are used to enhance bandwidth efficiency. Thus, MIMO systems provide multiple inputs and multiple outputs for a single channel and are thus able to exploit spatial diversity and spatial multiplexing. Additionally, multi-stream transmission in MIMO systems increases the possible peak-data rate and as a consequence also the achievable system capacity. Further information about MIMO systems can be gathered from the IEEE specifications 802.11n, 802.16-2004 and 802.16e, as well as 802.20 and 802.22 which relate to other standards. Specifically, MIMO systems have been introduced to radio systems like e.g. WiMAX (Worldwide Interoperability for Microwave Access) and are currently standardized in 3GPP for WCDMA (Wideband Code Division Multiple Access) as well as 3GPP E-UTRAN (Enhanced Universal Mobile Telecommunications System (UMTS) Terrestrial Radio Access Network), such as LTE (Long Term Evolution) or 3.9G.

Different MIMO transmission modes in downlink require different information in order to allow appropriate link adaptation. A mobile station (MS, also referred to us "user equipment" (UE) in 3D terminology) may have a linear or non-linear reception unit and Mr reception antennas, while the node B has Mt transmission antennas. Based on partial or full channel state information (CSI) fed back from the MS, the BS may perform appropriate space-time processing such as multiuser scheduling, power and modulation adaptation, beamforming, and space-time coding. The CSI may include a channel direction information (CDI) and a channel quality information (CQI), which can be used for determining beamforming direction and power allocation.

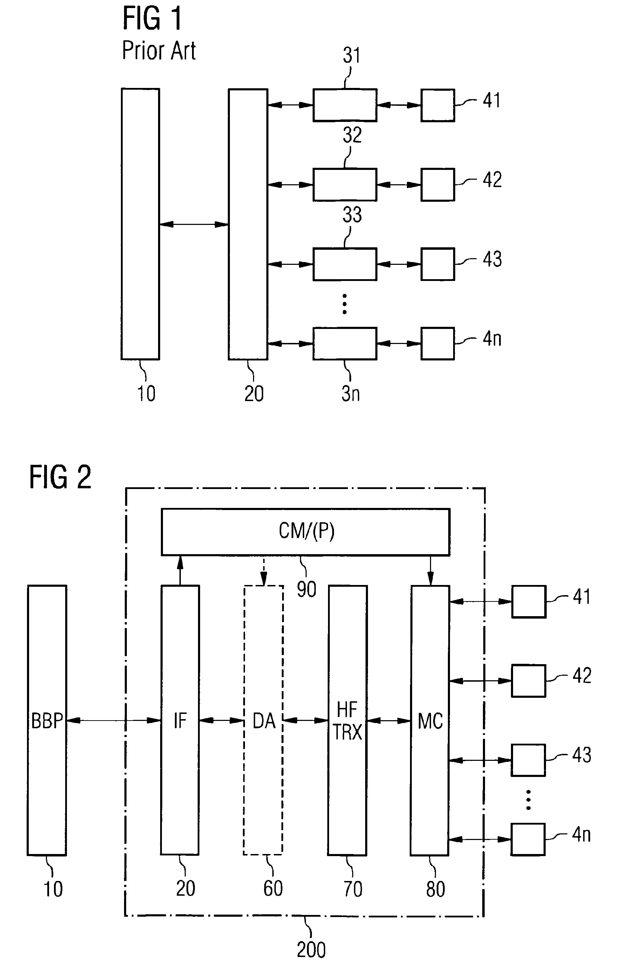

Fig. 1 shows a schematic block diagram of a conventional MIMO transceiver. A plurality of antenna elements 41 to 4n are each supplied by a dedicated HF transceiver 31 to 3n. These HF transceivers 31 to 3n are connected via a digital interface 20 to a baseband unit or processor 10 which processes the signals for each individual HF branch.

In general, this means that the baseband processor 10 has to process or handle individual data streams for each of the antenna elements 41 to 4n, which are transferred or routed via the digital interface 20 and the HF transceivers 31 to 3n. Thus, conventional MIMO transceiver systems may require completely independent data streams for each transmission and reception path, wherein multiple antenna configurations or beams could be formed simultaneously. This leads to complex processing structures and requires increased processing resources, so that the number of antenna elements was usually kept low (e.g. two antenna elements with two transceivers).

### SUMMARY

It is therefore an object of the present invention to provide a multi-antenna transmission and/or reception system with reduced processing complexity.

This object is achieved by a method of receiving or transmitting data via a front-end unit comprising at least two antennas, wherein configuration information used for beamforming by said at least two antennas is supplied to said front-end unit prior to an individual transmission or reception of data, and wherein said configuration information is generated based on a grouping of respective other transmission ends to adapt at least one respective single beam to cover at least one determined group of said respective other transmission ends.
- Furthermore, the above object is achieved by a multi-antenna device comprising a front-end unit for receiving or transmitting data via at least two antennas, wherein said multi-antenna device comprises processing means for generating configuration information used for beamforming by said at least two antennas and supplying said configuration information to said front-end unit prior to an individual transmission or reception of data, wherein said processing means is arranged to generate said configuration information based on a grouping of respective other transmission ends to adapt at least one respective single beam to cover at least one determined group of said respective other transmission ends.

In addition, the above object is achieved by a computer program product comprising code means for producing the steps of the above method when run on a computing device which may be or may be provided in the respective multi-antenna device, e.g., an access or base station device or a terminal device of a cellular or non-cellular wireless communication system.

Accordingly, different antenna beams are generated or shaped at different timings, so that the number of data streams or transmission/reception paths and also the data rate at the interface to the front-end unit can be reduced. Consequently, the complexity of the involved data processing can be reduced substantially. To be more specific, the antennas or antenna elements can be individually controlled or supplied and the number of transceivers can be reduced or minimized. This leads to a reduced complexity of processing and processing resources. A time-variant processing can be implemented at the front-end unit, which processing is independent from the baseband processing. Moreover, a distributed processing can be provided.

Additionally, the proposed grouping of transmission ends allows that all users or subscribers can be served one after the other with an optimum antenna or beam pattern.

The proposed grouping may comprise a combination or pooling of those transmission ends (e.g. mobile users or subscribers with their mobile terminals or user equipments, or fixed transmission devices or stations which are currently active) which are located in a predetermined direction range into a logical group.

Furthermore, the configuration information may be generated at a baseband processing unit, e.g., based on a scheduling function or scheduler. In multi-user wireless communications, different users are to be served with various quality of service (QoS) requirements. When multiple antennas are used on the transmitter side and/or receiver side, the scheduling scheme is significant in determining the system capacity in a multi-user multi-antenna environment, where different transmit antennas can be assigned for data transmissions of specific users, simultaneously. One approach is multiuser diversity, in which the instantaneous knowledge of the received signal-to-noise ratio (SNR) is exploited to schedule a user for service. Thus, user or terminal information required for generating the configuration information can be obtained or derived from such schedulers or scheduling functions.
The configuration information may be written into a memory of the front-end unit. Thereby, temporary or long-term storage of configuration parameters is possible, so that timing or processing constraints can be relaxed.

In an embodiment, the configuration information may indicate at least one of phase and amplitude values for the at least two antennas. According to a more specific example, the configuration information may comprise matching parameters used for controlling a matching network of said at least two antennas. Thereby, required amplitude and phase values for obtaining a desired beam pattern or azimuthal or elevational direction of a predetermined beam can be generated by the matching network. The matching parameters may be maintained for the whole duration of said individual transmission or reception, or may be varied in a predetermined manner during the individual transmission or reception. This predetermined manner or time-dependency of variation may for example be derived from the configuration information, e.g., by adding a corresponding parameter. As an example, the matching parameters may be varied to achieve at least one of tracking and tilt control of antenna beams or patterns.

As an additional option, the configuration information may indicate pre-configuration parameters used for pre-configuring an antenna pattern of the at least two antennas. Thereby, an additional option is given for optimizing the shape and/or directivity of the antenna pattern. In a specific example, the pre-configuration parameters may comprise a predistortion information, such as a predistortion vector or matrix. The pre-configuration parameters may be prestored in a memory of the front-end unit, wherein the configuration information may comprise a memory address for reading the predistortion information from said memory of said front-end unit. Thereby, processing load and timing constraints can be reduced.

As an optional feature, the pre-configuration parameters may be varied during the individual transmission or reception, so that an individual adaptation to any environmental or positional changes is possible. As another option, channel coding may be applied to the configuration information before being supplied to the front-end unit. This channel coding may involve an error correction coding to thereby reduced error probability during forwarding of the configuration information to the front-end unit.

In another embodiment, the at least two antennas may be detachably mounted to the front-end unit. Thereby, the antenna configuration can be changed simply by replacing the detachable antennas or antenna array. Optionally, the at least two antennas may be integrated in a housing of the front-end unit, so that the replacement could be achieved by replacing the housing.

Further advantageous modifications or developments are defined in the dependent claims.

### BRIEF DESCRIPTION OF THE DRAWINGS

The present invention will now be described on the basis of embodiments with reference to the accompanying drawings in which:
Fig. 1 shows a schematic block diagram of a conventional multi-antenna transceiver;
Fig. 2 shows a schematic block diagram of a multi-antenna transceiver according to the embodiment;
Fig. 3 shows a schematic diagram indicating a radio cell with several terminals and allocated beams according to the embodiment;
Fig. 4 shows a time diagram indicating timings for providing configuration information according to the embodiment;
Fig. 5 shows a flow diagram of a configuration control method according to the embodiment; and
Fig. 6 a schematic block diagram of a computer-based implementation of the embodiment.

### DESCRIPTION OF THE EMBODIMENT

The embodiment will now be described based a wireless multi-antenna transmission system, such as - but not limited to - a MIMO system with multiple transmitting (Tx) and/or receiving (Rx) antennas at a transceiver unit of a base station device, such as a Node B in 3G terminology, or a terminal device, such as user equipment (UE) in 3G terminology. However, it will be apparent from the following description and is therefore explicitly stressed that the present invention can be applied to any other network architecture with different radio access technologies (e.g. WLAN, WiMAX, E-UTRAN or 3G LTE) involving multi-antenna transmitter devices (e.g. base station devices, access points or other access devices) capable of being operated in different operating modes.

Fig. 1 shows a schematic block diagram of a MIMO transceiver according to an embodiment. A plurality of antennas or antenna elements 41 to 4n are connected to or are part of a radio frequency (RF) or high frequency (HF) front-end unit 200. More specifically, the antenna elements 41 to 4n are connected via a controllable matching network or circuit 80 to a HF transceiver stage or unit 70 of the front-end unit 200. These HF transceivers 31 to 3n are connected via an optional adaptation circuit 60 and a digital interface 20, e.g., a digitized and serial internal base station interface between 'Radio Equipment Control' (REC) and 'Radio Equipment' (RE) such as the Common Public Radio Interface (CPRI), to a baseband unit or processor 10. The adaptation circuit 60 and the matching circuit 80 by a configuration control unit 90 which may be a configuration memory with an optional configuration processor. It is noted that the adaptation circuit 60 and the configuration memory may be provided as an optional feature. Therefore, the adaptation circuit 60 is shown as a dashed block.

According to the embodiment, different antenna patterns with different numbers and/or patterns of beams are generated at different timings based on a grouping of detected terminal devices of subscribers or users. This grouping may be performed at the baseband processor 10, e.g. be a scheduler or scheduling function thereof. The grouping may be obtained by combining users whose terminal devices are located in a predetermined range of directions or angular range into a logical groups.

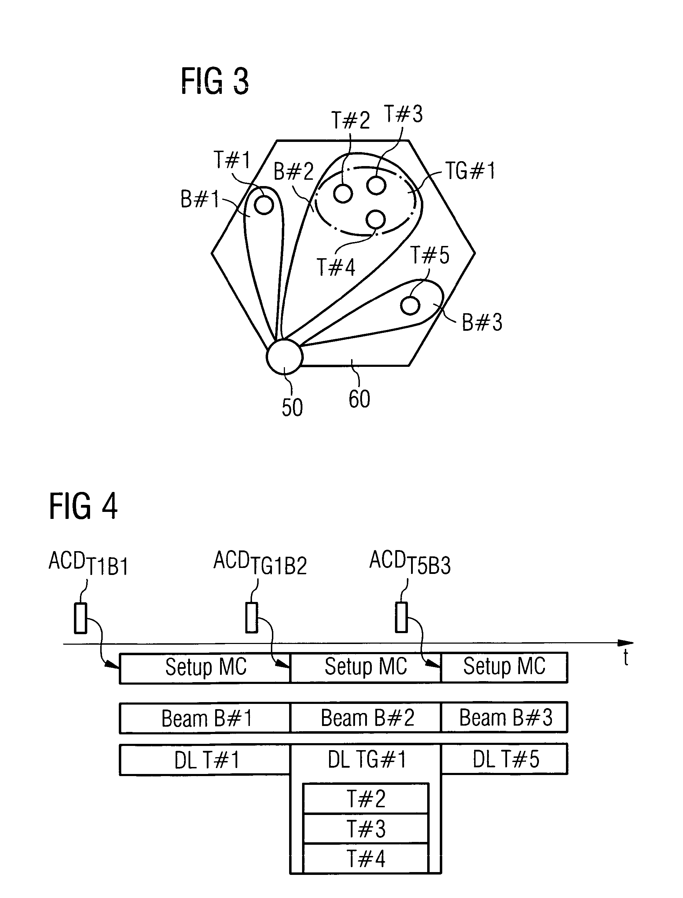

Fig. 3 shows a schematic diagram indicating a radio cell 60 with several terminals T#1 to T#5 and a base station or remote radio head 50 comprising a MIMO transceiver as shown in Fig. 2. Beams B#1 to B#3 generated by the base station or remote radio head 50 are allocated to the terminals T#1 to T#5 and can be controlled by the configuration control unit 90 of Fig. 2.

In the example and at the point in time shown in Fig. 3, terminals T#2 to T#4 are currently located in close directions so that they have been grouped (i.e., combined or pooled) as a logical terminal group TG#1 two which a single beam B#2 is allocated and correspondingly shaped by the configuration control unit 90. This grouping may be performed by a scheduler or scheduling function of the baseband processor 10. Thereby, a single transmission and/or reception path is allocated to the terminals T#2 to T#4. This grouping process allows reconfiguration of the antenna elements 41 to 4n and their patterns, so that users or subscribers can be successively served by an optimized antenna pattern and at a reduced number of transmission and/or reception paths. A strict separation and independent processing of data streams and transmission/reception paths is thus no longer necessary.

Prior to the start of each individual transmission or reception the baseband processor 10 forwards or signals to the front-end unit 200 how to adjust or adapt the antenna elements 41 to 4n. This is achieved by corresponding control of the matching circuit 80 which may comprise a phase shifter and attenuator network controlled by the configuration control unit 90 and which is interconnected between the antenna elements 41 to 4n and the HF transceiver unit 70. The configuration information or parameters generated by the baseband processor 10 are received at the digital interface 20 and are forwarded to the configuration control unit 90, where they may be stored in the configuration memory or directly used for controlling the matching circuit 80 during the following data transmission and/or reception.

Fig. 4 shows a time diagram indicating timings for providing the configuration information to the front-end unit 200, e.g., for loading the configuration information into the configuration memory of the configuration control unit 90 to obtain the antenna pattern of Fig. 3.

In particular, Fig. 4 shows how the antenna elements 41 to 4n are newly configured or reconfigured by the baseband processor 10 via the configuration control unit 90. In particular, the baseband processor 10 may determine optimum phase or amplitude values, respectively, for each of the antenna elements 41 to 4n. This data set is forwarded to the fontend unit 200 via the digital interface 20 prior to the transmission or reception of user data (e.g. sampling values). The configuration control unit 90 of the front-end unit 200 may write the configuration data set into the configuration memory, if provided. Based on the configuration data set, a matching network of the matching circuit 80 is controlled or set to generate a corresponding antenna pattern.

As can be gathered from Fig. 4, antenna configuration data ACD_{T1B1} for the first terminal T#1 and the allocated first beam B#1 are generated and supplied to the front-end unit 200 and then a corresponding setup of the matching circuit (MC) 80 is initiated, so that the desired first beam B#1 for downlink (DL) transmission to the terminal T#1 is obtained. Subsequently, antenna configuration data ACD_{TG1B2} for the determined first terminal group TG#1 (i.e. terminals T#2 to T#4) and the allocated second beam B#2 are generated and supplied to the front-end unit 200 and then a corresponding setup of the matching circuit (MC) 80 is initiated, so that the desired second beam B#2 for downlink (DL) transmission to the terminals T#2, T#3 and T#4 is obtained. Finally, antenna configuration data ACD_{T5B3} for the fifth terminal T#5 and the allocated third beam B#3 are generated and supplied to the front-end unit 200 and then a corresponding setup of the matching circuit (MC) 80 is initiated, so that the desired third beam B#3 for downlink (DL) transmission to the terminal T#5 is obtained.

Depending on the desired implementation, the configuration parameters or data sets for the matching circuit 80 can be kept constant or maintained during the whole transmission period or duration of the corresponding user or user group. As an alternative, the configuration parameters or data sets may be varied by the configuration control unit according to a predetermined algorithm, rule or temporary relationship. These underlying rules, relationships or algorithms may also be determined, loaded or forwarded by the baseband processor 10 at or prior to the start of transmission or reception.

The configuration control unit 90 may comprise the optional configuration memory and a processor element adapted to interpret and/or convert the configuration information supplied via the digital interface 20 and generate required control information or parameters for the matching circuit 80 and the optional digital adaptation circuit 60 at a correct timing. Simple examples of such time-varying parametric control could be spatial tracking of antenna beam(s), time-varying tilt (i.e. elevation angle), etc.

A further advantage of the proposed arrangement, the antenna elements 41 to 4n can be part of the HF front-end unit 200. This provides the opportunity of implementing a new antenna configuration independent from the interface 20 and the HF front-end unit 200. Namely, if the antenna element 41 to 4n are formed as an integral or integrated part of the housing of the HF front-end unit 200, the antenna configuration could be changed by replacing the housing.

In a further embodiment, the antenna pattern may also be controlled or modified by means of the optional adaptation circuit 60. This can be achieved by a statical pre-configuration or in a more or less time-varying manner as explained above in connection with the control of the matching circuit 80. As an example, a predistortion could be applied by the adaptation circuit 60, wherein predistorton parameters or information, such as a predistortion dataset, vector or matrix, could be supplied to the configuration control unit 90 via the interface 20. Based thereon, the configuration control unit 90 then controls the adaptation circuit 60. As an alternative option, the predistortion information could be prestored in the configuration memory and a memory address for selecting a desired predistortion information could be forwarded via the interface 20. The configuration memory could be written or re-written more or less often via the interface 20.

An important aspect of another embodiment is that it could be important to convey or transmit data, such as the configuration information, via the digital interface 20 in a secure or error-protected manner. To achieve this, a channel coding or the like could be introduced, e.g., at the baseband processor 10, for transmission from the baseband processor 10 to the HF front-end unit 200.

According to still another embodiment, the baseband processor and front-end functions or functionalities may be implemented as software programs or routines controlling a central processing or computing device provided at the concerned multi-antenna device, e.g., access or base station device or terminal device.

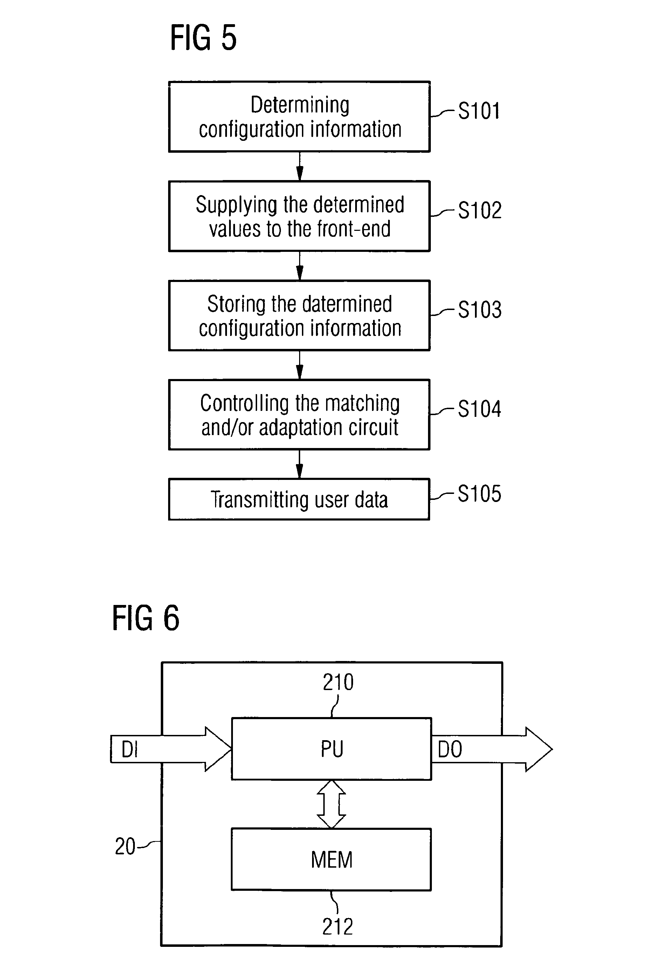

Fig. 5 shows a general flow diagram of steps of the functions or steps of the proposed configuration control method. Initially, in step S101, configuration information (e.g. phase and amplitude values for the matching operation (matching circuit 80) for each antenna element or predistortion parameters for the adaptation operation (adaptation circuit 60)) are determined. Then, in step S102, the determined configuration information, e.g., values or parameter(s), are supplied to the front-end. In step S103, the determined configuration information may be stored in the configuration memory or at a temporary register or the like provided at the configuration control unit 90. Then, in step S104, the matching and/or adaptation circuits 80, 60 are controlled based on the configuration information. Finally, in step S105, user data for actual transmission and/or reception is transmitted by using the adapted antenna pattern.

Fig. 6 shows a schematic block diagram of a software-based implementation of the proposed advanced feedback transmission system. Here, proposed multi-antenna transceiver comprises a processing unit 210, which may be any processor or computer device with a control unit which performs control based on software routines of a control program stored in a memory 212. Program code instructions are fetched from the memory 212 and are loaded to the control unit of the processing unit 210 in order to perform the processing steps of the above functionalities described in connection with Fig. 5 or with the respective blocks 10, 20 and 90 of Fig. 2. These processing steps may be performed on the basis of input data DI and may generate output data DO, wherein the input data DI may correspond to location information or other subscriber or terminal information and the output data DO may correspond to the control information or parameters used for controlling the matching circuit 80 and/or the adaptation circuit 60.

At this point, it is again noted that at least the relevant functionalities of blocks 10, 20 and 90 of Fig. 2 as well as the steps of Fig. 5 can be implemented as discrete hardware or signal processing units, or alternatively as software routines or programs controlling a processor or computer device to perform the processing steps of the above functionalities.

To summarize, a method, multi-antenna device and computer program product for receiving or transmitting data via a front-end unit 200 comprising at least two antennas 41 to 4n have been described, wherein configuration information used for beamforming by the at least two antennas 41 to 4n is supplied to the front-end unit 200 prior to an individual transmission or reception of data, and wherein the configuration information is generated based on a grouping of respective other transmission ends to adapt at least one respective single beam to cover at least one determined group of the respective other transmission ends. Thereby, different beams can be generated at different timings, so that the number of data streams to be processed, the data rate, and the processing complexity can be reduced substantially.

It is to be noted that the present invention is not restricted to the embodiment described above, but can be implemented in any network environment involving multi-antenna transmission controlled by feedback signaling. Any signaling format or means can be used for feeding back the mode indicator and the feedback information. The embodiment may thus vary within the scope of the attached claims.

## Claims

1. A method of receiving or transmitting data via a front-end unit (200) comprising at least two antennas (41-4n), wherein configuration information used for beamforming by said at least two antennas (41-4n) is supplied to said front-end unit (200) prior to an individual transmission or reception of data, and wherein said configuration information is generated based on a grouping of respective other transmission ends to adapt at least one respective single beam to cover at least one determined group of said respective other transmission ends.

2. The method according to claim 1, wherein said grouping comprises combining transmission ends located in a predetermined direction range into a logical group.

3. The method according to claim 1 or 2, wherein said configuration information is generated at a baseband processing unit (10).

4. The method according to any one of the preceding claims, wherein said configuration information is written into a memory (90) of said front-end unit (200).

5. The method according to any one of the preceding claims, wherein said configuration information indicates at least one of phase and amplitude values for said at least two antennas (41-4n).

6. The method according to any one of the preceding claims, wherein said configuration information comprises matching parameters used for controlling a matching network of said at least two antennas (41-4n).

7. The method according to claim 6, wherein said matching parameters are maintained for the whole duration of said individual transmission or reception.

8. The method according to claim 6, wherein said matching parameters are varied in a predetermined manner during said individual transmission or reception.

9. The method according to claim 8, wherein said predetermined manner is derived from said configuration information.

10. The method according to claim 8 or 9, wherein said matching parameters are varied for at least one of tracking and tilt control of antenna beams.

11. The method according to any of the preceding claims, wherein said configuration information indicates pre-configuration parameters used for pre-configuring an antenna pattern of said at least two antennas (41-4n).

12. The method according to claim 11, wherein said pre-configuration parameters comprise a predistortion information.

13. The method according to claim 11, wherein said pre-configuration parameters are prestored in a memory (90) of said front-end unit (200), and wherein said configuration information comprise a memory address for reading said predistortion information from said memory (90) of said front-end unit (200).

14. The method according to any one of claims 11 to 13, wherein said pre-configuration parameters are varied during said individual transmission or reception.

15. The method according to any one of the preceding claims, wherein a channel coding is applied to said configuration information before being supplied to said front-end unit (200) .

16. A multi-antenna device comprising a front-end unit (200) for receiving or transmitting data via at least two antennas (41-4n), wherein said multi-antenna device comprises processing means (10) for generating configuration information used for beamforming by said at least two antennas (41-4n) and supplying said configuration information to said front-end unit (200) prior to an individual transmission or reception of data, wherein said processing means (10) is arranged to generate said configuration information based on a grouping of respective other transmission ends to adapt at least one respective single beam to cover at least one determined group of said respective other transmission ends.

17. The device according to claim 16, wherein said at least two antennas (41-4n) are detachably mounted to said front-end unit (200)

18. The device according to claim 17, wherein said at least two antennas (41-4n) are integrated in a housing of said front-end unit (200).

19. The device according to any one of claims 16 to 18, wherein said processing means (10) are arrange to combine transmission ends located in a predetermined direction range into a logical group.

20. The device according to any one of claims 16 to 19, wherein said processing means comprise a baseband processing unit (10).

21. The device according to any one of claims 16 to 20, wherein said said front-end unit (200) comprises a memory (90) for storing said configuration information.

22. The device according to any one of claims 16 to 20, wherein said front-end unit (200) comprises a matching circuit (80) for controlling said beamforming, and wherein said front-end unit (200) is arranged to derive matching parameters from said configuration information and to control said matching circuit (80) by using said matching parameters.

23. The device according to any one of claims 16 to 21, wherein said front-end unit (200) is arranged to maintain said matching parameters for the whole duration of said individual transmission or reception.

24. The device according to any one of claims 16 to 21, wherein said front-end unit (200) is arranged to vary said matching parameters in a predetermined manner during said individual transmission or reception.

25. The device according to claim 24, wherein front-end unit (200) is arranged to derive said predetermined manner from said configuration information.

26. The device according to claim 24 or 25, wherein said front-end unit (200) is arranged to vary said matching parameters for at least one of tracking and tilt control of antenna beams.

27. The device according to any one of claims 16 to 26, wherein said front-end unit (200) comprises a pre-configuration circuit (60) for pre-configuring an antenna pattern of said at least two antennas (41-4n) based on pre-configuration parameters indicated by said configuration information.

28. The device according to claim 27, wherein said pre-configuration circuit (60) is arranged to apply predistortion to said individual transmission or reception based on predistortion information comprised in said pre-configuration parameters.

29. The device according to claim 28, wherein said front-end unit (200) comprises a memory (90) for storing said pre-configuration parameters, and wherein said front-end unit (200) is arranged to read said predistortion information from said memory (90) by using a memory address derived from said configuration information.

30. The device according to any one of claims 27 to 29, wherein said processing means (10) are arranged to vary said pre-configuration parameters during said individual transmission or reception.

31. The device according to any one of claims 16 to 30, wherein said processing means (10) are arranged to apply a channel coding to said configuration information before supplying it to said front-end unit (200).

32. A transceiver module comprising a multi-antenna device according to any one of claims 16 to 31.

33. A base station device comprising a multi-antenna device according to any one of claims 16 to 31.

34. A terminal device comprising a multi-antenna device according to any one of claims 16 to 31.

35. A computer program product comprising code means for producing the steps of method claim 1 when run on a computing device.
